# FASCICULE DE BREVET EUROPEEN

(11) **EP 3 249 823 B1**
(45) Date de publication et mention de la délivrance du brevet: **12.12.2018**
(21) Numéro de dépôt: 17172038.6
(22) Date de dépôt: 19.05.2017
(51) Int. Cl.: H04B 1/38, H01P 1/161, H01P 1/213

(54) **EXCITATEUR RADIOFRÉQUENCE COMPACT BI-POLARISATION ET MULTI-FRÉQUENCES POUR SOURCE PRIMAIRE D'ANTENNE ET UNE SOURCE PRIMAIRE D'ANTENNE EQUIPÉE D'UN TEL EXCITATEUR RADIOFRÉQUENCE**
KOMPAKTER DOPPELPOLARISIERTER FUNKFREQUENZERREGER MIT MEHRFACHFREQUENZEN FÜR ANTENNENPRIMÄRSTRAHLER, UND MIT EINEM SOLCHEN FUNKFREQUENZERREGER AUSGESTATTETER ANTENNENPRIMÄRSTRAHLER
COMPACT BI-POLARITY, MULTI-FREQUENCY RADIOFREQUENCY EXCITER FOR A PRIMARY SOURCE OF AN ANTENNA AND PRIMARY SOURCE OF AN ANTENNA PROVIDED WITH SUCH A RADIOFREQUENCY EXCITER

(30) Priorité: 24.05.2016 FR 1600832
(43) Date de publication de la demande: 29.11.2017
(73) Titulaire: THALES, 92400 Courbevoie (FR)
(72) Inventeur: CARTAILLAC, Erwan, 09700 LABATUT (FR); MADER, Philippe, 31400 TOULOUSE (FR)
(74) Mandataire: Priori, Enrico

(56) Documents cités:
- JP-A- S6 351 701
- US-A1- 2011 109 409

## Description

La présente invention concerne un excitateur radiofréquence compact bi-polarisation et multi-fréquences pour une source primaire d'antenne et une source primaire d'antenne équipée d'un tel excitateur radiofréquence. Elle s'applique au domaine des télécommunications spatiales pour les antennes à un ou plusieurs réflecteurs, situées à bord des satellites ou au sol, et concerne en particulier les sources primaires fonctionnant en polarisation linéaire pour des applications mono-faisceaux ou multifaisceaux.

Les missions en bande Ku sont généralement réalisées en utilisant des antennes grégoriennes aménagées sur une face de satellite orientée vers la Terre, couramment appelée « face Terre », et/ou avec des antennes en simple-offset aménagées sur une face latérale d'un satellite, ces deux architectures d'antenne étant souvent aménagées sur un seul satellite. En raison des contraintes d'aménagement, ces deux architectures d'antennes à réflecteur nécessitent des géométries de sources primaires différentes et spécifiques à chaque architecture. Il en résulte que pour assurer les fonctions radiofréquences d'émission et de réception de signaux pour les différentes antennes, un grand nombre de pièces radiofréquences RF différentes sont à fabriquer, à tester et à assembler, ce qui peut d'une part, induire des problèmes dans la fiabilité et dans la tenue des performances RF, mécanique et thermique des antennes et d'autre part, présenter une augmentation du coût et de la masse des antennes.

Une source primaire d'antenne est classiquement constituée d'un élément rayonnant, par exemple un cornet, alimenté par une chaîne radiofréquence RF comportant essentiellement un excitateur radiofréquence RF. Les excitateurs radiofréquences connus sont classiquement constitués de plusieurs dispositifs différents qui permettent de réaliser séquentiellement, d'une part la séparation des polarisations, puis d'autre part la séparation des bandes de fréquences d'émission et de réception.

Il est connu de l'état de la technique le document US 2011/0109409 A1, qui décrit un transducteur orthomode constitué d'une première portion de guide d'ondes et d'une deuxième portion de guide d'ondes, placées le long de la direction de transmission de signaux radio.

Un excitateur radiofréquence à bi-polarisation linéaire peut par exemple, être constitué d'un transducteur orthomode asymétrique à deux bras orthogonaux, destiné à séparer les deux polarisations linéaires, respectivement dénommées horizontale H et verticale V, et de deux diplexeurs destinés à séparer, pour chacune des deux polarisations linéaires, la bande de fréquence de fonctionnement du cornet en deux sous-bandes, respectivement d'émission et de réception. Cette architecture présente un nombre de composants limité pour réaliser la séparation des bandes de fréquences et des polarisations, mais ne peut être utilisée que lorsque les bandes de fréquences d'émission et de réception sont proches l'une de l'autre car sa bande passante est faible. En outre, l'utilisation d'un OMT asymétrique engendre une forte sensibilité de l'antenne aux modes de propagation d'ordres supérieur au mode fondamental, ce qui peut dégrader les performances radiofréquences de l'antenne.

Alternativement, un excitateur radiofréquence à bi-polarisation linéaire peut, par exemple, être constitué d'une jonction orthomode à quatre bras associée à des dispositifs de recombinaison pour séparer les deux bandes de fréquences d'émission et de réception et prélever, puis recombiner, les deux polarisations dans la bande de fréquence d'émission, la jonction orthomode étant connectée à un transducteur orthomode pour séparer les deux polarisations de la bande de fréquences de réception. L'utilisation d'une jonction orthomode à quatre bras associée à des dispositifs de recombinaison rend cette architecture très complexe, très encombrante, et très difficile à aménager sur des antennes grégoriennes.

Alternativement, un excitateur radiofréquence à bi-polarisation linéaire peut, par exemple, être constitué d'une jonction orthomode dissymétrique à deux bras orthogonaux situés dans le même plan pour séparer les deux bandes de fréquences d'émission et de réception et les deux polarisations dans la bande de fréquence d'émission, puis d'un transducteur orthomode pour séparer les deux polarisations de la bande de fréquences de réception. Cette architecture présente un encombrement moindre, mais présente un niveau de découplage des deux polarisations compris entre -18 et -22 dB pour la bande de fréquence la plus haute, ce qui est très insuffisant pour des missions à couverture mono-faisceau dont le besoin est un découplage de l'ordre de -50 dB, ainsi que pour des missions à couverture multi-faisceaux dont le besoin est un découplage de l'ordre de -35dB. Ce mauvais découplage des deux polarisations linéaires est dû à la structure dissymétrique de la jonction orthomode.

Le but de l'invention est de remédier aux inconvénients des excitateurs radiofréquences à bi-polarisation linéaire connus et de réaliser un excitateur radiofréquence à bi-polarisation linéaire ayant une architecture plus compacte, plus simple, moins encombrante et comportant moins de composants radiofréquences, et pouvant être utilisée de façon standard dans les deux types d'antennes grégorienne et à simple-offset.

Pour cela, l'invention concerne un excitateur radiofréquence à bi-polarisation linéaire et multi-fréquences dans lequel la séparation des polarisations et des bandes de fréquences d'émission et de réception est réalisée conjointement au sein d'un unique composant radiofréquence.

Selon l'invention, l'excitateur radiofréquence compact bi-polarisation linéaire et multi-fréquences est constitué d'une jonction de guide d'onde s'étendant parallèlement à un axe longitudinal et comportant un accès axial destiné à être raccordé à un cornet rayonnant, au moins quatre accès latéraux et au moins quatre filtres fréquentiels respectivement associés aux quatre accès latéraux, la jonction comportant, en série, une première cavité de couplage munie de deux fentes de couplage aptes à prélever une polarisation verticale par couplage magnétique ou électrique et une deuxième cavité de couplage munie de deux fentes de couplage aptes à prélever une polarisation horizontale par couplage magnétique ou électrique, les quatre filtres fréquentiels étant directement reliés aux quatre fentes de couplage respectives des deux polarisations verticale et horizontale, la première cavité de couplage comportant, une section transversale interne ayant une dimension verticale constante et une dimension horizontale décroissante entre l'accès axial et une ouverture transversale de sortie de la première cavité de couplage.

Avantageusement, les filtres latéraux connectés aux deux fentes de couplage de la polarisation verticale peuvent être, respectivement, un premier filtre centré sur une première bande de fréquence d'émission et un deuxième filtre centré sur une deuxième bande de fréquence de réception et les filtres latéraux connectés aux deux fentes de couplage de la polarisation horizontale peuvent être, respectivement, un troisième filtre centré sur la première bande de fréquence d'émission et un quatrième filtre centré sur la deuxième bande de fréquence de réception.

Avantageusement, la deuxième cavité de couplage peut comporter une section transversale interne ayant une dimension horizontale constante et une dimension verticale décroissante entre une ouverture d'entrée et une ouverture de sortie de la deuxième cavité de couplage.

Avantageusement, les deux fentes de couplage de la polarisation verticale sont parallèles entre elles et aménagées, de façon diamétralement opposées, dans des parois périphériques de la première cavité de couplage, et les deux fentes de couplage de la polarisation horizontale sont parallèles entre elles et disposées de façon diamétralement opposées dans des parois périphériques de la deuxième cavité de couplage.

Avantageusement, la jonction de guide d'onde peut comporter en outre une troisième cavité de découplage des deux polarisations linéaires horizontale et verticale, la troisième cavité de découplage étant située entre la première cavité de couplage et la deuxième cavité de couplage et ayant une section transversale interne de dimensions horizontale et verticale constantes.

Avantageusement, la troisième cavité de découplage a une longueur comprise entre zéro et un quart de la longueur d'onde guidée moyenne de la bande de fréquence d'émission.

Avantageusement, l'accès axial peut avoir une section circulaire et l'ouverture transversale de sortie de la première cavité de couplage peut avoir une section elliptique, l'ellipse ayant un grand axe orienté parallèlement à la dimension verticale et un petit axe orienté parallèlement à la dimension horizontale.

Avantageusement, l'ouverture transversale d'entrée de la deuxième cavité de couplage peut avoir une section elliptique et l'ouverture transversale de sortie de la deuxième cavité de couplage peut avoir une section circulaire.

Alternativement, l'accès axial peut avoir une section carrée et l'ouverture transversale de sortie de la première cavité de couplage peut avoir une section rectangulaire, le rectangle ayant un grand côté orienté parallèlement à la dimension verticale et un petit côté orienté parallèlement à la dimension horizontale.

Avantageusement, la section transversale de la première cavité de couplage et de la deuxième cavité de couplage, peut diminuer de façon continue ou par paliers successifs.

Avantageusement, l'excitateur radiofréquence peut comporter plusieurs jonctions de guide d'onde connectées en série.

L'invention concerne aussi une source primaire d'antenne équipée d'un tel excitateur radiofréquence.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma synoptique, d'un exemple d'excitateur radiofréquence compact à bi-polarisation linéaire comportant deux bandes de fréquences différentes, selon l'invention ;
- figure 2 : un schéma en coupe longitudinale selon un plan XZ contenant la polarisation verticale, d'un excitateur radiofréquence, selon l'invention;
- figure 3 : un schéma en coupe longitudinale selon un plan YZ contenant la polarisation horizontale, de l'excitateur radiofréquence de la figure 2, selon l'invention;
- figures 4a et 4b: deux schémas en coupe transversale selon deux plans transversaux différents illustrant les formes de la section transversale interne de la première cavité de couplage de l'excitateur radiofréquence, respectivement en entrée et au niveau des fentes de couplage, selon un premier exemple de réalisation de l'invention ;
- figures 5a et 5b : deux schémas en coupe transversale selon deux plans transversaux différents illustrant les formes de la section transversale interne de la première cavité de couplage de l'excitateur radiofréquence, respectivement en entrée et au niveau des fentes de couplage, selon un deuxième exemple de réalisation de l'invention ;
- figures 6a, 6b, 6c : trois schémas en coupe longitudinale illustrant trois exemples d'évolution des dimensions de la première et de la deuxième cavité de couplage de l'excitateur radiofréquence, selon l'invention ;
- figure 7 : un schéma synoptique d'un exemple d'excitateur radiofréquence compact à bi-polarisation linéaire comportant n bandes de fréquences de fonctionnement différentes, où n est supérieur à deux, selon l'invention ;
- figure 8 : un schéma synoptique d'un exemple d'excitateur radiofréquence compact à bi-polarisation circulaire, selon l'invention.

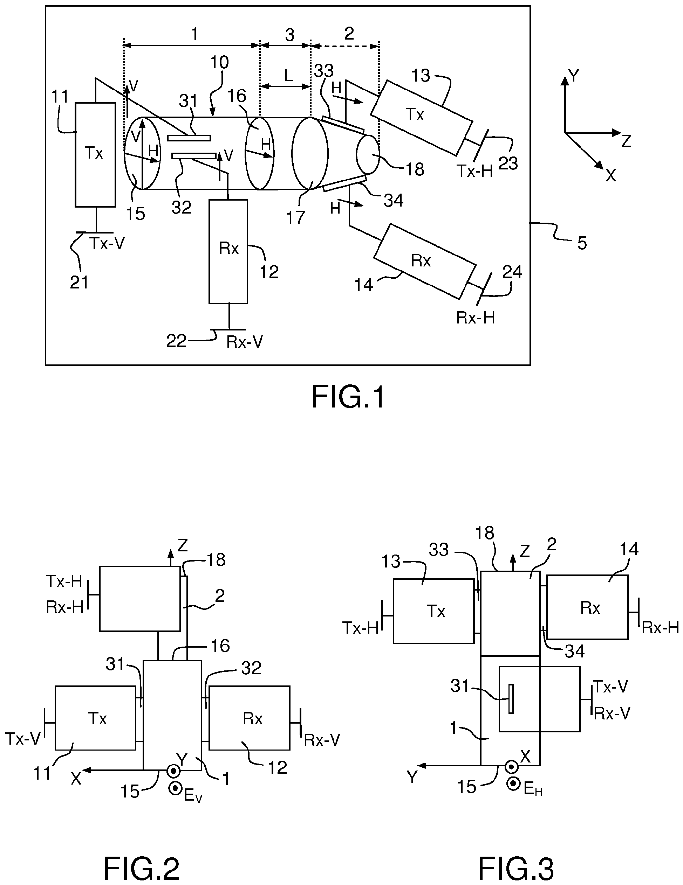

L'excitateur radiofréquence 5 représenté sur le schéma synoptique de la figure 1 et en coupe longitudinale sur les figures 2 et 3 est constitué d'une jonction de guide d'onde 10 longitudinale comportant un accès axial 15 destiné à être raccordé à un cornet rayonnant et au moins quatre filtres fréquentiels 11, 12, 13, 14 respectivement associés à quatre accès latéraux 21, 22, 23, 24, les quatre filtres fréquentiels 11, 12, 13, 14 étant directement connectés à la jonction par l'intermédiaire de quatre fentes de couplage respectives 31, 32, 33, 34 aménagées dans des parois périphériques de la jonction 10. L'accès axial 15 est une ouverture d'entrée de la jonction 10 dont les dimensions transversales, selon deux directions respectivement horizontale et verticale, sont de valeurs égales de façon à permettre la propagation d'ondes radiofréquences polarisées selon deux polarisations linéaires orthogonales respectivement horizontale et verticale, le sens de la polarisation étant, par convention, parallèle au champ électrique des ondes radiofréquences correspondantes. Par exemple, la section transversale de l'accès axial peut être circulaire ou carrée. Sur les différentes figures 1, 2, 3, la direction de propagation des ondes radiofréquences est orientée selon un axe Z, la polarisation horizontale peut être parallèle à un axe X et la polarisation verticale peut être parallèle à un axe Y.

La jonction 10 comporte deux cavités de couplage différentes 1, 2, aménagées successivement en série selon la direction longitudinale Z, et respectivement dédiées à la séparation et au prélèvement des deux polarisations linéaires, respectivement verticale V et horizontale H. Le prélèvement des deux polarisations horizontale et verticale est réalisé au-travers de fentes de couplage dédiées. Les deux fentes 31, 32 de prélèvement de la polarisation verticale V sont parallèles entre elles et disposées symétriquement et de façon diamétralement opposées au-travers des parois périphériques de la première cavité de couplage 1. Les deux fentes de couplage 33, 34 de la polarisation horizontale H sont parallèles entre elles et disposées symétriquement et de façon diamétralement opposées au-travers des parois périphériques de la deuxième cavité de couplage 2. L'orientation des fentes de couplage peut être parallèle ou perpendiculaire à la direction longitudinale Z correspondant à la direction de propagation des ondes radiofréquences dans la jonction 10. Dans le cas où les fentes de couplage sont orientées parallèlement à la direction longitudinale Z, comme représenté sur l'exemple de la figure 1, le couplage est magnétique, lorsqu'elles sont orientées perpendiculairement à la direction longitudinale Z, le couplage est électrique.

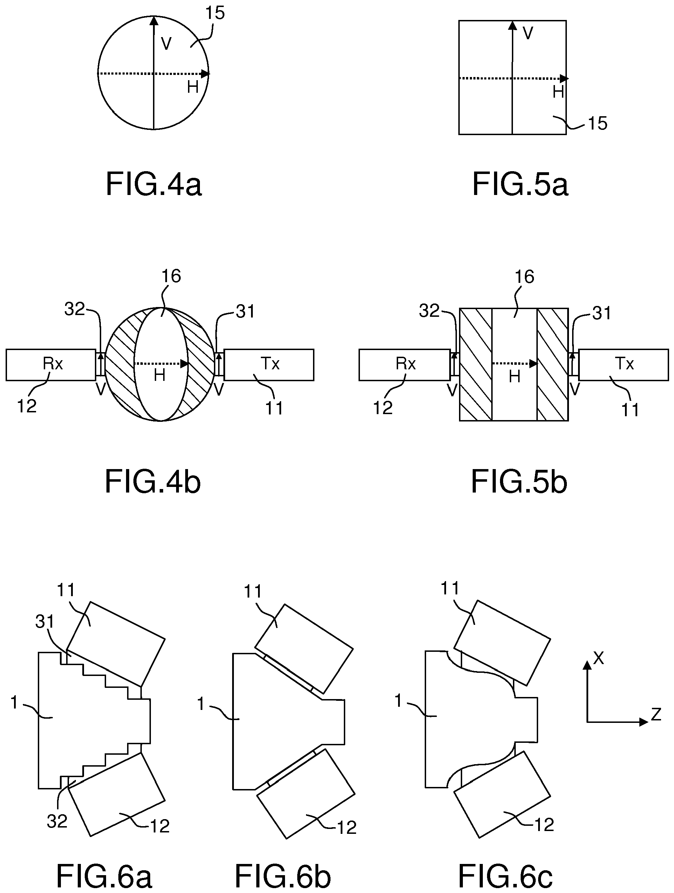

La première cavité de couplage 1 comporte une ouverture d'entrée transversale constituée par l'accès axial 15 et une ouverture de sortie transversale 16 reliée à une ouverture d'entrée transversale 17 de la deuxième cavité de couplage 2. La première cavité de couplage 1 munie des deux fentes de couplage 31, 32 dédiées au prélèvement de la polarisation verticale, comporte une section transversale interne ayant une dimension verticale constante mais une dimension horizontale décroissante entre l'ouverture d'entrée 15 et l'ouverture de sortie 16 de la première cavité de couplage. La dimension horizontale de la section transversale interne de la première cavité de couplage 1 étant décroissante, les deux polarisations H et V voient l'ouverture de sortie 16 sous la forme d'une fente orientée verticalement. Or, comme une fente laisse passer un champ électrique orienté parallèlement à ses petits côtés, le rétrécissement horizontal de la section transversale interne forme un plan de court-circuit pour la composante du signal de polarisation verticale V qui est alors réfléchie et prélevée par les deux fentes de couplage 31, 32 de la première cavité de couplage 1. A l'inverse, la composante du signal de polarisation H ne rencontre pas le plan de court-circuit, traverse la première cavité de couplage et continue de se propager librement vers la deuxième cavité de couplage 2. Par exemple, comme représenté sur les figures 4a et 4b, la première cavité de couplage peut être constituée d'une transition circulaire/elliptique lorsque l'accès axial 15 a une section circulaire et l'ouverture de sortie 16 a une section elliptique, l'ellipse ayant un grand axe orienté parallèlement à la dimension verticale et un petit axe orienté parallèlement à la dimension horizontale. Alternativement, comme représenté sur les figures 5a et 5b, la première cavité de couplage peut être constituée d'une transition carrée/rectangulaire lorsque l'accès axial 15 a une section carrée et l'ouverture de sortie 16 a une section rectangulaire, la section rectangulaire ayant une longueur orientée parallèlement à la dimension verticale et une largeur orientée parallèlement à la dimension horizontale.

Pour séparer les deux bandes de fréquence d'émission Tx et de réception Rx, les deux fentes de couplage 31, 32 de la polarisation verticale V sont respectivement reliées à un premier filtre 11 centré sur une première bande de fréquence d'émission Tx et rejetant les fréquences extérieures à cette première bande de fréquence, et à un deuxième filtre 12 centré sur une deuxième bande de fréquence de réception Rx et rejetant les fréquences extérieures à cette deuxième bande de fréquence. Ainsi la première cavité de couplage 1 comporte, en sortie du premier filtre 11, un premier accès latéral 21 fonctionnant en polarisation verticale V et dans la première bande de fréquence d'émission Tx et, en sortie du deuxième filtre 12, la première cavité de couplage 1 comporte un deuxième accès latéral 22 fonctionnant en polarisation verticale V et dans la deuxième bande de fréquence de réception Rx.

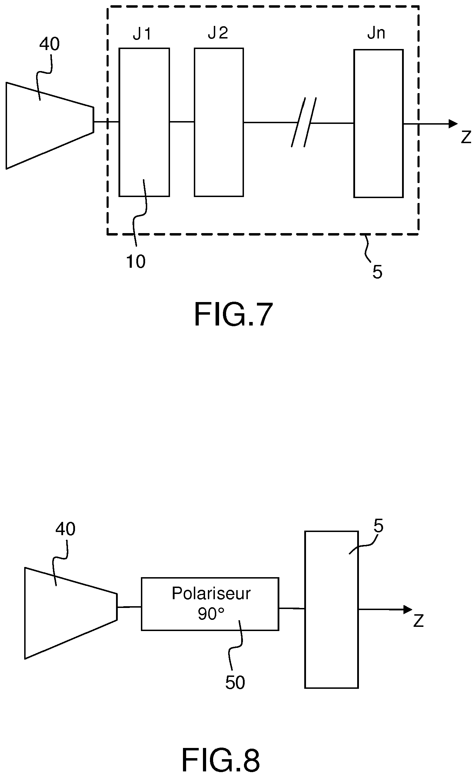

La deuxième cavité de couplage 2 comporte une ouverture d'entrée 17 reliée à l'ouverture de sortie 16 de la première cavité de couplage 1 et une sortie 18 pouvant être reliée à une paroi terminale de la jonction 10 ou, comme représenté sur le schéma synoptique de la figure 7, à un ou plusieurs étages supplémentaires J2 à Jn de dimensions plus faibles et fonctionnant à des fréquences supérieures à la première et à la deuxième bande de fréquence. La deuxième cavité de couplage 2 est munie de deux fentes de couplage 33, 34 dédiées au prélèvement de la polarisation horizontale H et respectivement associées à un troisième filtre 13 centré sur la bande de fréquence d'émission Tx et à un quatrième filtre 14 centré sur la bande de fréquence de réception Rx. Comme représenté sur la figure 1, bien que ce ne soit pas indispensable, la deuxième cavité de couplage 2 peut avantageusement comporter une section transversale interne ayant une dimension horizontale constante et une dimension verticale décroissante entre l'ouverture d'entrée 17 et l'ouverture de sortie 18 de la deuxième cavité de couplage 2, de façon à obtenir, en sortie 18 de la deuxième cavité de couplage, une section transversale plus petite mais de forme identique à la section transversale de l'accès axial 15 situé en entrée de la première cavité de couplage. La réduction de la section transversale interne de la deuxième cavité de couplage permet d'augmenter le pourcentage de bande passante couplée.

Alternativement, la deuxième cavité de couplage 2 peut comporter une section transversale interne ayant des dimensions horizontale et verticale constantes, mais dans ce cas, la bande passante couplée sera plus faible.

Avantageusement, comme représenté sur les différents exemples de réalisation illustrés sur les figures 6a, 6b, 6c, la section transversale de la première cavité de couplage 1 et de la deuxième cavité de couplage 2, peut diminuer progressivement de façon continue comme sur les figures 6b et 6c, ou par paliers successifs comme représenté sur la figure 6a. Par ailleurs, le profil de la première cavité de couplage et de la deuxième cavité de couplage, selon une direction longitudinale, peut être linéaire ou avoir une courbure décroissante selon une forme de spline, comme représenté sur la figure 6c.

Avantageusement, comme représenté sur la figure 1, la jonction 10 peut comporter en outre une troisième cavité 3, intermédiaire entre la première cavité de couplage 1 et la deuxième cavité de couplage 2, la troisième cavité permettant d'améliorer le découplage entre les deux polarisations linéaires horizontale H et verticale V. La troisième cavité de découplage 3 a une longueur L comprise entre zéro et un quart de la longueur d'onde guidée moyenne de la première bande de fréquence d'émission Tx et a une section transversale interne ayant des dimensions horizontale et verticale constantes sur toute sa longueur. Une longueur L égale à un quart de la longueur d'onde guidée moyenne de la première bande de fréquence d'émission Tx permet d'obtenir un niveau de découplage de l'ordre de -50dB entre les accès de polarisation verticale et horizontale, ce qui est nécessaire pour des applications à des antennes multifaisceaux. Pour une application à une antenne mono-faisceau, un découplage entre - 30dB et -35dB est généralement suffisant et la longueur L peut être nulle. Dans le cas où la première cavité de couplage 1 est constituée d'une transition circulaire/elliptique, la troisième cavité de découplage 3 a une section transversale interne de forme elliptique. Dans le cas où la première cavité de couplage 1 est constituée d'une transition carrée/rectangulaire, la troisième cavité de découplage 3 a une section transversale interne de forme rectangulaire.

Comme représenté sur la figure 7 qui illustre un schéma synoptique d'un exemple de source rayonnante d'antenne fonctionnant dans plusieurs bandes de fréquence, pour augmenter le nombre de fréquences de fonctionnement, il est possible de relier, en série, plusieurs jonctions ayant des structures identiques à la structure de la jonction 10, mais des dimensions plus petites. Sur la figure 7, la source radiofréquence comporte un cornet rayonnant 40 connecté à un excitateur radiofréquence 5 conforme à l'invention. L'excitateur radiofréquence comporte plusieurs étages 10, J2, ..., Jn, différents connectés en série, chaque étage étant constitué d'une jonction conforme à la jonction 10 représentée sur le schéma synoptique de la figure 1, les différentes jonctions 10 et J2 à Jn étant dédiées à des bandes de fréquence différentes. Les bandes de fréquence des jonctions J2 à Jn étant de plus en plus hautes et supérieures à la première bande de fréquence et à la deuxième bande de fréquence prélevées par la jonction 10.

Comme représenté sur la figure 8, au lieu de fonctionner en polarisation linéaire, il est également possible d'utiliser une source rayonnante qui fonctionne en polarisation circulaire. Pour cela, il suffit de placer un polariseur 50 entre le cornet rayonnant 40 et l'excitateur radiofréquence 5. Le polariseur est destiné à établir une différence de phase de 90° entre les deux polarisations H et V de l'excitateur radiofréquence 5.

## Revendications

1. Excitateur radiofréquence compact bi-polarisation linéaire et multi-fréquences, constitué d'une jonction (10) de guide d'onde s'étendant parallèlement à un axe longitudinal et comportant un accès axial (15) destiné à être raccordé à un cornet rayonnant et au moins quatre accès latéraux (21, 22, 23, 24), **caractérisé en ce qu'**il comprend au moins quatre filtres fréquentiels (11, 12, 13, 14) respectivement associés aux quatre accès latéraux, la jonction comportant, en série, une première cavité de couplage (1) munie de deux fentes de couplage (31, 32) aptes à prélever une polarisation verticale par couplage magnétique ou électrique et une deuxième cavité de couplage (2) munie de deux fentes de couplage (33, 34) aptes à prélever une polarisation horizontale par couplage magnétique ou électrique, les quatre filtres fréquentiels (11, 12, 13, 14) étant directement reliés aux quatre fentes de couplage (31, 32, 33, 34) respectives des deux polarisations verticale et horizontale, la première cavité de couplage (1) comportant, une section transversale interne ayant une dimension verticale constante et une dimension horizontale décroissante entre l'accès axial (15) et une ouverture transversale de sortie (16) de la première cavité de couplage (1).

2. Excitateur radiofréquence selon la revendication 1, **caractérisé en ce que** les filtres latéraux (11, 12) connectés aux deux fentes de couplage (31, 32) de la polarisation verticale sont respectivement un premier filtre centré sur une première bande de fréquence d'émission et un deuxième filtre centré sur une deuxième bande de fréquence de réception et **en ce que** les filtres latéraux (13, 14) connectés aux deux fentes de couplage (33, 34) de la polarisation horizontale sont respectivement un troisième filtre centré sur la première bande de fréquence d'émission et un quatrième filtre centré sur la deuxième bande de fréquence de réception.

3. Excitateur radiofréquence selon la revendication 2, **caractérisé en ce que** la deuxième cavité de couplage (2) comporte une section transversale interne ayant une dimension horizontale constante et une dimension verticale décroissante entre une ouverture d'entrée (17) et une ouverture de sortie (18) de la deuxième cavité de couplage (2).

4. Excitateur radiofréquence selon la revendication 3, **caractérisé en ce que** les deux fentes de couplage (31, 32) de la polarisation verticale sont parallèles entre elles et aménagées, de façon diamétralement opposées, dans des parois périphériques de la première cavité de couplage (1), et **en ce que** les deux fentes de couplage (33, 34) de la polarisation horizontale sont parallèles entre elles et disposées de façon diamétralement opposées dans des parois périphériques de la deuxième cavité de couplage (2).

5. Excitateur radiofréquence selon l'une des revendications 2 à 4, **caractérisé en ce que** la jonction (10) de guide d'onde comporte en outre une troisième cavité (3) de découplage des deux polarisations linéaires horizontale et verticale, la troisième cavité de découplage étant située entre la première cavité de couplage (1) et la deuxième cavité de couplage (2) et ayant une section transversale interne de dimensions horizontale et verticale constantes.

6. Excitateur radiofréquence selon la revendication 5, **caractérisé en ce que** la troisième cavité (3) de découplage a une longueur (L) comprise entre zéro et un quart de la longueur d'onde guidée moyenne de la bande de fréquence d'émission.

7. Excitateur radiofréquence selon l'une des revendications 1 à 6, **caractérisé en ce que** l'accès axial (15) a une section circulaire et l'ouverture transversale de sortie (16) de la première cavité de couplage (1) a une section elliptique, l'ellipse ayant un grand axe orienté parallèlement à la dimension verticale et un petit axe orienté parallèlement à la dimension horizontale.

8. Excitateur radiofréquence selon la revendication 7, **caractérisé en ce que** l'ouverture transversale d'entrée (17) de la deuxième cavité de couplage (2) a une section elliptique et l'ouverture transversale de sortie (18) de la deuxième cavité de couplage (2) a une section circulaire.

9. Excitateur radiofréquence selon l'une des revendications 1 à 6, **caractérisé en ce que** l'accès axial a une section carrée et l'ouverture transversale de sortie (16) de la première cavité de couplage (1) a une section rectangulaire, le rectangle ayant un grand côté orienté parallèlement à la dimension verticale et un petit côté orienté parallèlement à la dimension horizontale.

10. Excitateur radiofréquence selon l'une des revendications 3 à 9, **caractérisé en ce que** la section transversale de la première cavité de couplage (1) et de la deuxième cavité de couplage (2), diminue de façon continue ou par paliers successifs.

11. Excitateur radiofréquence selon la revendication 10, **caractérisé en ce qu'**il comporte plusieurs jonctions (10) de guide d'onde connectées en série.

12. Source primaire d'antenne **caractérisée en ce qu'**elle comporte un excitateur radiofréquence (5) selon l'une des revendications précédentes.

13. Source primaire selon la revendication 12, **caractérisée en ce qu'**elle comporte en outre un polariseur (50) connecté à l'accès axial (15) de l'excitateur radiofréquence (5).

## Patentansprüche

1. Kompakter Bipolarisierungs-Linear- und Mehrfachfrequenz-Hochfrequenzerreger, gebildet aus einem Hohlwellenleiter-Übergang (10), welcher sich parallel zu einer Längsachse erstreckt und einen axialen Zugang (15) besitzt, dazu bestimmt, mit einem Hornstrahler verbunden zu werden, und mindestens vier seitliche Zugänge (21, 22, 23, 24), **dadurch gekennzeichnet, dass** er mindestens vier Frequenzfilter (11, 12, 13, 14) beinhaltet, welche jeweils mit den vier seitlichen Zugängen assoziiert sind, wobei der Übergang in Reihe einen ersten Kopplungshohlraum (1) besitzt, welcher mit zwei Kopplungsschlitzen (31, 32) versehen ist, welche in der Lage sind, eine vertikale Polarisierung durch magnetische oder elektrische Kopplung abzunehmen und einen zweiten Kopplungshohlraum (2), welcher mit zwei Kopplungsschlitzen (33, 34) versehen ist, welche in der Lage sind, eine horizontale Polarisierung durch magnetische oder elektrische Kopplung abzunehmen, wobei die vier Frequenzfilter (11, 12, 13, 14) direkt mit den vier jeweiligen Kopplungsschlitzen (31, 32, 33, 34) der beiden Polarisierungen, nämlich der vertikalen und der horizontalen Polarisierung, verbunden sind, wobei der erste Kopplungshohlraum (1) einen internen Querschnitt beinhaltet, welcher eine konstante vertikale Abmessung und eine absteigende horizontale Abmessung zwischen dem axialen Zugang (15) und einer Quer-Ausgangsöffnung (16) des ersten Kopplungshohlraums (1) besitzt.

2. Hochfrequenzerreger nach Anspruch 1, **dadurch gekennzeichnet, dass** die seitlichen Filter (11, 12), welche mit den beiden Kopplungsschlitzen (31, 32) der vertikalen Polarisierung verbunden sind, jeweils ein erster Filter, welcher auf ein erstes Sendefrequenzband zentriert ist, und ein zweiter Filter sind, welcher auf ein zweites Empfangsfrequenzband zentriert ist, und dadurch, dass die seitlichen Filter (13, 14), welche mit den beiden Kopplungsschlitzen (33, 34) der horizontalen Polarisierung verbunden sind, jeweils ein dritter Filter, welcher auf das erste Sendefrequenzband zentriert ist, und ein vierter Filter sind, welcher auf das zweite Empfangsfrequenzband zentriert ist.

3. Hochfrequenzerreger nach Anspruch 2, **dadurch gekennzeichnet, dass** der zweite Kopplungshohlraum (2) einen internen Querschnitt beinhaltet, welcher eine konstante horizontale Abmessung und eine absteigende vertikale Abmessung zwischen einer Eingangsöffnung (17) und einer Ausgangsöffnung (18) des zweiten Kopplungshohlraums (2) besitzt.

4. Hochfrequenzerreger nach Anspruch 3, **dadurch gekennzeichnet, dass** die beiden Kopplungsschlitze (31, 32) der vertikalen Polarisierung parallel miteinander und diametral entgegengesetzt zueinander in umlaufenden Wänden des ersten Kopplungshohlraums (1) angeordnet sind, und dadurch, dass die beiden Kopplungsschlitze (33, 34) der horizontalen Polarisierung parallel miteinander und diametral entgegengesetzt zueinander in umlaufenden Wänden des zweiten Kopplungshohlraums (2) angeordnet sind.

5. Hochfrequenzerreger nach einem der Ansprüche 2 bis 4, **dadurch gekennzeichnet, dass** der Hohlwellenleiter-Übergang (10) zudem einen dritten Hohlraum (3) zur Entkopplung der beiden linearen Polarisierungen, nämlich der horizontalen und der vertikalen Polarisierung, beinhaltet, wobei der dritte Entkopplungshohlraum sich zwischen dem ersten Kopplungshohlraum (1) und dem zweiten Kopplungshohlraum (2) befindet und einen internen Querschnitt besitzt, dessen horizontale und vertikale Abmessungen konstant sind.

6. Hochfrequenzerreger nach Anspruch 5, **dadurch gekennzeichnet, dass** der dritte Entkopplungshohlraum (3) eine Länge (L) besitzt, welche zwischen null und einem Viertel der mittleren geleiteten Wellenlänge des Sendefrequenzbandes beträgt.

7. Hochfrequenzerreger nach einem der Ansprüche 1 bis 6, **dadurch gekennzeichnet, dass** der axiale Zugang (15) einen kreisförmigen Querschnitt besitzt und die Quer-Ausgangsöffnung (16) des ersten Kopplungshohlraums (1) einen elliptischen Querschnitt besitzt, wobei die Ellipse eine Hauptachse besitzt, welche parallel zur vertikalen Abmessung ausgerichtet ist und eine Nebenachse, welche parallel zur horizontalen Abmessung ausgerichtet ist.

8. Hochfrequenzerreger nach Anspruch 7, **dadurch gekennzeichnet, dass** die Quer-Eingangsöffnung (17) des zweiten Kopplungshohlraums (2) einen elliptischen Querschnitt besitzt und die Quer-Ausgangsöffnung (18) des zweiten Kopplungshohlraums (2) einen kreisförmigen Querschnitt besitzt.

9. Hochfrequenzerreger nach einem der Ansprüche 1 bis 6, **dadurch gekennzeichnet, dass** der axiale Zugang einen quadratischen Querschnitt besitzt und die Quer-Ausgangsöffnung (16) des ersten Kopplungshohlraums (1) einen rechteckigen Querschnitt besitzt, wobei das Rechteck eine lange Seite besitzt, welche parallel zur vertikalen Abmessung ausgerichtet ist und eine kurze Seite, welche parallel zur horizontalen Abmessung ausgerichtet ist.

10. Hochfrequenzerreger nach einem der Ansprüche 3 bis 9, **dadurch gekennzeichnet, dass** der Querschnitt des ersten Kopplungshohlraums (1) und der Querschnitt des zweiten Kopplungshohlraums (2) kontinuierlich oder in aufeinander folgenden Stufen absteigen.

11. Hochfrequenzerreger nach Anspruch 10, **dadurch gekennzeichnet, dass** er mehrere in Reihe geschaltete Hohlwellenleiter-Übergänge (10) besitzt.

12. Primärantennenstrahler, **dadurch gekennzeichnet, dass** er einen Hochfrequenzerreger (5) nach einem der vorhergehenden Ansprüche beinhaltet.

13. Primärstrahler nach Anspruch 12, **dadurch gekennzeichnet, dass** er zudem einen Polarisator (50) beinhaltet, welcher an den axialen Zugang (15) des Hochfrequenzerregers (5) angeschlossen ist.

## Claims

1. Compact multifrequency dual-linear-polarization radiofrequency exciter, comprising a waveguide junction (10) extending parallelly to a longitudinal axis and including an axial access (15) intended to be connected to a horn antenna, and at least four lateral accesses (21, 22, 23, 24), **characterized in that** it comprises at least four frequency filters (11, 12, 13, 14) that are associated with the four lateral accesses, respectively, the junction including, in series, a first coupling cavity (1) equipped with two coupling slots (31, 32) that are able to sample a vertical polarization by magnetic or electric coupling, and a second coupling cavity (2) equipped with two coupling slots (33, 34) that are able to sample a horizontal polarization by magnetic or electric coupling, the four frequency filters (11, 12, 13, 14) being connected directly to the four respective coupling slots (31, 32, 33, 34) of the two, vertical and horizontal, polarizations, the first coupling cavity (1) having an internal transverse cross-section having a constant vertical dimension and a horizontal dimension that decreases between the axial access (15) and a transverse exit aperture (16) of the first coupling cavity (1).

2. Radiofrequency exciter according to Claim 1, **characterized in that** the lateral filters (11, 12) connected to the two coupling slots (31, 32) of the vertical polarization are a first filter centred on an emission first frequency band and a second filter centred on a reception second frequency band, respectively, and **in that** the lateral filters (13, 14) connected to the two coupling slots (33, 34) of the horizontal polarization are a third filter centred on the emission first frequency band and a fourth filter centred on the reception second frequency band, respectively.

3. Radiofrequency exciter according to Claim 2, **characterized in that** the second coupling cavity (2) has an internal transverse cross-section having a constant horizontal dimension and a vertical dimension that decreases between an entrance aperture (17) and an exit aperture (18) of the second coupling cavity (2).

4. Radiofrequency exciter according to Claim 3, **characterized in that** the two coupling slots (31, 32) of the vertical polarization are parallel to each other and arranged, radially opposite, in peripheral walls of the first coupling cavity (1), and **in that** the two coupling slots (33, 34) of the horizontal polarization are parallel to each other and placed radially opposite in peripheral walls of the second coupling cavity (2).

5. Radiofrequency exciter according to one of Claims 2 to 4, **characterized in that** the waveguide junction (10) furthermore includes a third cavity (3) for decoupling the two, horizontal and vertical, linear polarizations, the decoupling third cavity being located between the first coupling cavity (1) and the second coupling cavity (2) and having an internal transverse cross-section of constant horizontal and vertical dimensions.

6. Radiofrequency exciter according to Claim 5, **characterized in that** the decoupling third cavity (3) has a length (L) comprised between zero and one quarter of the average wavelength guided in the emission frequency band.

7. Radiofrequency exciter according to one of Claims 1 to 6, **characterized in that** the axial access (15) has a circular cross-section and the transverse exit aperture (16) of the first coupling cavity (1) has an elliptical cross-section, the ellipse having a major axis oriented parallelly to the vertical dimension and a minor axis oriented parallelly to the horizontal dimension

8. Radiofrequency exciter according to Claim 7, **characterized in that** the transverse entrance aperture (17) of the second coupling cavity (2) has an elliptical cross-section and the transverse exit aperture (18) of the second coupling cavity (2) has a circular cross-section.

9. Radiofrequency exciter according to one of Claims 1 to 6, **characterized in that** the axial access has a square cross-section and the transverse exit aperture (16) of the first coupling cavity (1) has a rectangular cross-section, the rectangle having a large side oriented parallelly to the vertical dimension and a small side oriented parallelly to the horizontal dimension.

10. Radiofrequency exciter according to one of Claims 3 to 9, **characterized in that** the transverse cross-section of the first coupling cavity (1) and of the second coupling cavity (2) decreases continually or in successive steps.

11. Radiofrequency exciter according to Claim 10, **characterized in that** it includes a plurality of waveguide junctions (10) connected in series.

12. Primary antenna source **characterized in that** it includes a radiofrequency exciter (5) according to one of the preceding claims.

13. Primary source according to Claim 12, **characterized in that** it furthermore includes a polarizer (50) connected to the axial access (15) of the radiofrequency exciter (5).
